# EUROPEAN PATENT SPECIFICATION

(11) **EP 0 306 025 B1**
(45) Date of publication and mention of the grant of the patent: **02.02.1994**
(21) Application number: 88114286.3
(22) Date of filing: 01.09.1988
(51) Int. Cl.: C08G 75/02

(54) **Process for producing polyarylene sulfide**
Verfahren zur Herstellung von Polyarylen-Sulfiden
Procédé de préparation de polyarylènesulfures

(30) Priority: 02.09.1987 JP 220925/87; 16.09.1987 JP 231763/87; 28.09.1987 JP 243283/87; 28.09.1987 JP 243284/87
(43) Date of publication of application: 08.03.1989
(73) Proprietor: IDEMITSU PETROCHEMICAL CO. LTD., Tokyo 100 (JP)
(72) Inventor: Ogata, Norio, Sodegaura-machi Kimitsu-gun Chiba-ken (JP); Yamato, Hiroyasu, Sodegaura-machi Kimitsu-gun Chiba-ken (JP); Senga, Minoru, Sodegaura-machi Kimitsu-gun Chiba-ken (JP); Oota, Seiichi, Sodegaura-machi Kimitsu-gun Chiba-ken (JP)
(74) Representative: TER MEER STEINMEISTER & PARTNER GbR

(56) References cited:
- EP-A- 0 073 525
- US-A- 4 038 263

## Description

### (1) Field of the Invention

The present invention relates ot a process for producing a polyarylene sulfide, particularly, white polyarylene sulfide suitable as molding material.

### (2) Description of the Related Art

Various methods have been proposed for producing polyarylene sulfide.

U.S.-A-.4,038,263 discloses (1) a method for preparing a polyphenylene sulfide in N-methylpyrrolidone (hereinafter simply referred to as NMP) as a polar solvent by using p-dichlorobenzene, hydrous sodium sulfide and lithium halide as starting materials, and (2) a method for preparing polyphenylene sulfide by at first reacting hydrous sodium sulfide, NMP and lithium halide, dehydrating the reaction mixture and then adding p-dichlorobenzene to the dehydrated composition to conduct polymerization.

Since the method (1) uses a great amount of hydrous sodium sulfide, it involves a problem that a great amount of water is contained within the reaction system, making it difficult to obtain a polyarylene sulfide of high molecular weight, the product is easily colored and the loss of NMP is remarkable.

In the latter method (2), on the other hand, since heating is conducted at a temperature higher than 200°C in the dehydrating step, not only the energy loss is great, but also it brings about the following problems:
(1) sodium sulfide is decomposed violently,
(2) NMP is decomposed violently and it is difficult to recover a portion thereof, and
(3) the polymer is colored due to by-products.

Japanese Examined Patent Publication (Kokoku) No. Sho 45-3368, Japanese Examined Patent Publication (Kokoku) No. Sho 52-12240 (corresponding to U.S. Patent No. 3,919,177 describe a method of producing poly-p-phenylene sulfide (hereinafter sometimes referred to simply as PPS) by reacting Na₂S as an ion supply source, a p-dihalogenated aromatic compound, a base and an alkali metal carboxylate in a polar solvent such as an amide compound, a lactam compound or a sulfone compound.

These methods described in these prior patent literatures are conducted by way of the following steps as illustrated more specifically as : 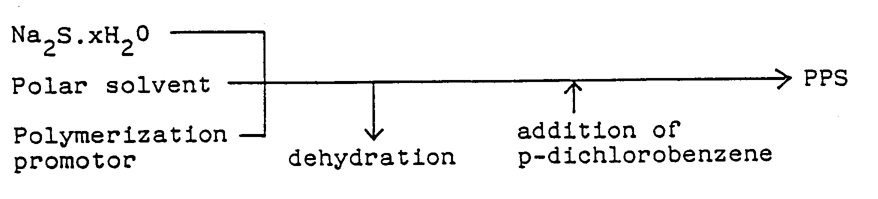
However, since heating is conducted at a temperature higher than 200°C in the dehydrating step, this method results in a large energy loss, as well as involves the same problems as those of (1) - (3) in the production process (2) described in U.S.-A-.4,038,263.

Moreover, since the polar solvent such as an amide compound and a lactam compound, used in this method are expensive and required in a great amount, the cost of the products produced by this method is increased.

Furthermore, since Na₂S is usually a hydrous salt, dehydrating treatment is required prior to the use. In addition, Na₂S is easily decomposed and H₂S released upon decomposition of Na₂S promotes corrosion of the device or side-reactions.

Furthermore, in the case of using N-methylpyrrolidone as a kind of the polar solvent, since the polar solvent is degraded to show brown color and, at the same time, produces a ring-opening adduct as the by-product, the production ratio is poor and, since the ratio of forming the oligomer is high during polymerization, it is not industrially advantageous.

Particularly, in this method, since sodium chloride is by-produced as much as 1.1 ton per one ton of PPS production, sodium chloride remains in PPS by as high as 1,000 - 8,000 ppm by the after treatment described in the publication and it is considered that this is attributable to the coloration in the polymer formed.

Generally, since PPS itself is highly water repellent, it is difficult by usual water washing to wash out the sodium chloride formed to less than 1000 ppm. Accordingly, there has been considered various means for reducing the amount of sodium chloride and a washing method using a surface active agent, for instance, has been disclosed as one of such means (refer to Japanese Patent Laid-Open Nos. Sho 57-108135 and 62-156134). Further, a method of introducing a surface active agent into the polymerization system is also disclosed (refer to Japanese Patent Laid-Open Nos. Sho 59-25822, 59-74127 and 59-108032).

However, since any of these desalting techniques known in the prior art uses the surface active agent which is not used directly for the production of PPS, the production cost is increased, or the purity of PPS is lowered to reduce the quality.

Furthermore, Japanese Patent Laid-Open No. Sho 60-200808 discloses a method of using an alcohol as the polar solvent, while Japanese Patent Laid-Open No. Sho 60-200807 discloses a method of using a hydrocarbon as the polar solvent respectively and a portion of water is distilled off from the reaction system in both of the methods.

However, in these methods, the resultant polymers exhibit pale gray color and products after dehydration and solvent removal exhibit red brown color.

Furthermore, they involve problems such as a requirement for the step of distilling off a great amount of solvent under a reduced pressure, elevation of the temperature of the reaction system by the heating upon distillation that leads to side-reactions, etc.

EP-A-0 073 525 discloses a method for dehydrating a pre-polymerization mixture in the preparation of polyarylene sulfide in which a reaction mixture of a sulfide, a lithium halide and an amide are treated to remove essentially all of the water from the reaction mixture.

The object of the present invention is to overcome the foregoing problems in the prior art and to provide a polymerization method capable of forming a higher whiteness degree polyarylene sulfide and improving the efficiency of recovering the solvent used for the polymerization.

Another object of the present invention is to provide a novel process for producing a polyarylene sulfide of high molecular weight capable of suppressing the decomposition of an alkali metal sulfide, reducing the energy and the cost in the dehydrating step, reducing the loss of the polar solvent and preventing the coloration of the resultant polyarylene sulfide.

A further object of the present invention is to provide a novel process for producing a polyarylene sulfide capable of preventing the coloration of the resultant polymer, molding with less scorching phenomenon, suppressing the decomposition of Na₂S and, further, suppressing the side-reaction of the solvent upon polymerization thereby reducing the loss of the solvent.

### SUMMARY OF THE INVENTION

The present invention has been accomplished as a result of various studies for attaining the foregoing objects.

According to one aspect, the present invention relates to a process for producing a polyarylene sulfide which comprises producing a reaction slurry by reacting an alkali metal sulfide (M²₂S) and at least one ingredient selected from the group consisting of alkali metal halides and alkaline earth metal halides (M¹X) in the presence of water and a polar solvent, and contacting the reaction product with a dihalogenated aromatic compound, characterized in that a volume ratio of water/polar solvent of from 0.25 to 1.5 is used and that the reaction product is contacted with the dihalogenated aromatic compound in the form of a solution recovered from the reaction slurry by a solid-liquid separation.

According to another aspect, the present invention relates to a process for producing a polyarylene sulfide which comprises producing a reaction slurry by reacting an alkali metal sulfide (M²₂S) and at least one ingredient selected from the group consisting of alkali metal halides and alkaline earth metal halides (M¹X) in the presence of water and a polar solvent, and contacting the reaction product with a dihalogenated aromatic compound, characterized in that the molar ratio of water/alkali metal sulfide is from 0.1 to 20, that a volume ratio of water/polar solvent of from 0.005 to 0.2 is used and that the reaction product is contacted with the dihalogenated aromatic compound in the form of a solid recovered from the reaction slurry by a solid-liquid separation.

### Alkali (earth) metal halide

The alkali metal halide and alkaline earth metal halide, either (one or both of which may sometimes be referred to as alkali (earth) metal halide) can be represented by the general formula M¹X. The metal ingredient M¹ is an alkali metal selected from the group consisting of sodium, potassium, lithium, rubidium and cesium as described above, as well as an alkaline earth metal selected from the group consisting of beryllium, calcium, magnesium, strontium, barium and radium. X represents a halogen atom bonded to the metal ingredient, selected from chlorine, bromine, fluorine or iodine.

In the present invention, either one or both of the alkali metal halide and the alkaline earth metal halide can be used.

The alkali (earth) metal halide particularly suitable in the present invention is lithium chloride and calcium chloride.

### Alkali metal sulfide

In the present invention, the alkali metal sulfide is represented by the general formula M²₂S in which the alkali metal ingredient M² is selected from the group consisting of sodium, potassium, lithium, rubidium and cesium.

The alkali metal sulfide usually employed includes those in the form of anhydrides or hydrates or an aqueous mixture, and the alkali metal sulfide may be used alone or two or more of them may be used in combination.

As a preferred alkali metal sulfide, sodium sulfide can be mentioned.

### Polar solvent

As the polar solvent, there can be mentioned, specifically, formamide, acetamide, N-methylformamide,
N,N-dimethylformamide, N,N-dimethylacetamide,
N,N-diethylformamide, N-methylpropionamide,
N-ethylpropionamide, N-cyclohexylbutylamide,
N-isopropyl-N-phenylhexanamide, N-p-tolyloctanamide,
N-benzyldodecanamide, N-cyclopentylmethyl-N-3-methylcyclopentylacetamide, N,N-dibutylbenzamide,
N-octyl-2-phenylacetamide,
N-dodecyl-3-methylhexanamide, eicosanamide,
N-nonadecylformamide, cyclohexanecarboxyamide,
3-cyclopentylpropionamide, hexanediamide,
N,N'-dimethylterephthalamide,
1,2-bis-(carbamoylethyl)benzene,
1,2,4-tris(carbamoyl)cyclohexane,
1,2,3,4-tetrakis(carbamoyl)butane,
N,N-dipropylbutylamide, 2-pyrrolidone,
N-methyl-2-pyrrolidone, ε-caprolactam,
N-methyl- ε-caprolactam, hexamethyl phosphoric triamide,
as well as those amides similar to the compounds described above. Depending on the case, mixture of these compounds may be used. Furthermore, dimethyl imidazolidinone or ureas such as tetramethyl urea may also be used.

Among them, a preferred polar solvent is a N-alkyl pyrrolidone, particularly, N-methylpyrrolidone.

Further, as described later, a cyclic ether as the solvent can be used for satisfactorily depositing the reaction product formed by the reaction between the alkali metal sulfide and the alkali (earth) metal halide in the solvent and reducing side reactions.

As the cyclic ether, there can be mentioned, for example, dioxane, 1,2-dioxolane, trioxane, furan, 2-methylfuran, tetrahydrofuran (hereinafter simply referred to as THF), tetrahydropyran and cineole. Among them, dioxane and THF are particularly suitable. If a ketone compound, for example, acetone or methyl ethyl ketone is used as the polar solvent, it reacts with the alkali metal sulfide into a corresponding hydrogen sulfide and by-products to eliminate the polymerizing ability. Further, an aromatic compound, for example, toluene or benzene is not preferred since the alkali metal sulfide and the alkali (earth) metal halide are insoluble and the reaction between them does not occur at all.

### Reaction between alkali (earth) metal halide and alkali metal sulfide.

According to the present invention a reaction product obtained by reacting the alkali (earth) metal halide and the alkali metal sulfide in the presence of water and polar solvent and separating by solid-liquid separation is brought into contact with the dihalogenated aromatic compound.

The reaction product may be used in the form of a solution separated from the reaction slurry obtained by the reaction described above, or as a solid separated from the reaction slurry according to the conditions of concentrations of materials and reaction temperature.

### (I) Use of the reaction product in the form of a solution

In the case of reacting the alkali metal sulfide (M²₂S) and the alkali (earth) metal halide (M¹X), it is desirable that the molar ratio between them is set to M²₂S/M¹X = 1/0.03 - 1/2.0, particularly, 1/0.5 - 1/1.8.

If the ratio between both of them is out of the range as specified above, for example, if M¹X is less than 0.03, the alkali (earth) halide as the starting material is precipitated in a great amount, or a reaction product having a sufficient activity for polymerisation described later can not be obtained. On the other hand, if the ratio exceeds 2.0, the alkali metal sulfide causes decomposition tending to increase the loss of the alkali metal sulfide.

The polar solvent is usually used by from 0.1 to 10 molar times, preferably, from 0.2 to 8 molar times and, more preferably, from 0.3 to 5 molar times based on the total amount of the alkali metal sulfide and the alkali (earth) metal halide.

If the amount of the polar solvent used exceeds the above specified range, a portion of the reaction product may be dissolved to increase the loss, which necessitates the recovery of a great amount of solvent containing the by-products and which is not preferred from an economical point of view. On the other hand, if the amount is less than the above-mentioned range, the dispersibility of the alkali metal sulfide and the alkali (earth) metal halide is worsened to inhibit the smooth proceeding of the reaction.

In the case of obtaining the reaction product of the alkali metal sulfide and the alkali (earth) metal halide in the form of a solution, it is desirable that a specified amount of water is present in the reaction system upon reacting the alkali metal sulfide and the alkali (earth) metal halide in the presence of the polar organic solvent. In this case, the water may be derived from water of addition, water of hydration or water present in the polar organic solvent.

In any of the cases, the amount of water used herein, as expressed by the volume ratio of water/polar organic solvent, is from 1/4 to 1.5/1(0.25 to 1.5).

If the amount of water used to the polar organic solvent is out of the above-specified range, the active sulfide compounds cause precipitation. On the other hand, if it is used in excess of 1.5, there appears a drawback that the resultant alkali metal halide is dissolved to reduce the desalting effect and a great amount of energy is required for removing water from the reaction system.

Since the reaction rate tends to be lowered if the temperature upon reacting the alkali metal sulfide and the alkali (earth) metal halide in the presence of the organic polar solvent is lower than 45°C, it is preferred that the reaction is conducted at a temperature higher than 45°C in the application use to an actual production line.

Although the upper limit for the reaction temperature can not always be determined definitely depending on the kind of the organic polar solvent used for the reaction, it is within a range up to 250°C.

If the reaction is conducted at a temperature higher than the above-mentioned upper limit, the decomposition of the alkali metal sulfide tends to occur violently to result in great loss, as well as there appears a tendency for the corrosion.

After conducting the reaction while satisfying the respective conditions as described above, precipitations of the alkali metal halide as one of the reaction products are separated, in which the separation means used therefor is optionally employed as required from customarily employed solid-liquid separation methods.

In the present invention, the alkali metal sulfide and the alkali (earth) metal halide are brought into reaction in the polar solvent containing the specific amount of water, the alkali (earth) metal halide deposited upon reaction is removed by a customary method, for example, filtration under vacuum suction, and the polar solvent and water are further removed from the resultant reaction slurry by a customary method, for example, distillation, thereby preparing the reaction product in the form of a solution. In the distillation, the polar solvent may be removed with water. Although it can not be determined exactly, it is estimated that active sulfide compounds such as M²S, M¹₂M²S₂ are formed.

The reaction product in the form of the solution thus prepared is used for the polymerization described later.

### (II) Use of the reaction product in the form of a solid

There are the following two methods for obtaining the reaction product in the solid form.

### (a) First method

In this case, the amounts of the alkali sulfide, the alkali (earth) halide and the polar solvent used are the same as those described for the explanation (I) above.

In the case of obtaining the reaction product of the alkali metal sulfide and the alkali (earth) metal halide in the solid form, it is desirable that a specific amount of water is present in the reaction system and that the amount of the water present in the reaction slurry is within a specific range with respect to the ratio between the water and the polar solvent when reacting the alkali metal sulfide and the alkali (earth) metal halide in the presence of the organic polar solvent. In the same manner as explained for (I) above, the water used herein may be derived from water of addition, water of hydration or water present in the organic polar solvent.

In the reaction system, the water/polar solvent ratio is from 0.005 to 0.2 and, preferably from 0.005 to 0.15 by volume ratio.

Since the amount of water is determined upon charging, there may occur such a case that the amount of water in the reaction slurry is not within the range as described above.

In such a case, it is required to add or remove the water and/or the polar solvent so that the amount of water in the reaction slurry is within the range as described above.

However, if the range for the amount of water after the reaction is within the range specified above, there is no requirement for adjusting the volume ratio of water/polar solvent. From an industrial point of view, since it is preferred that the volume ratio of the water/polar solvent in the reaction slurry is not adjusted, it is desirable to previously set the volume ratio of the water/polar solvent in the reaction solution such that it is within the above specified range upon reacting the alkali metal sulfide and the alkali (earth) metal halide in the organic polar solvent.

If the water/polar solvent ratio by volume in the reaction slurry is excessively low from the above-mentioned range, the alkali (earth) metal halide is entrained with the organic solvent and water removed by the subsequent procedure at the step of removing the organic solvent and water, or a long and large reactor is required due to the use of a great amount of the organic solvent thereby causing difficulty to put to industrial practice. On the other hand, if the water/polar solvent ratio by volume in the reaction slurry exceeds the above-mentioned range, the reaction product active sulfide compound transfers to the solution.

There is no particular restriction for the amount of water to the alkali metal sulfide so long as it can satisfy the volume ratio of water/polar solvent and it is in a sufficient amount to smoothly proceed the reaction between the alkali metal sulfide and the alkali (earth) metal halide, and it is such a ratio as providing a molar ratio of water/alkali metal sulfide of from 0.1 to 20, preferably from 0.5 to 10.

In the case of a molar ratio other than the range described above, for example, if the amount of water is insufficient or excessive, the reaction between the alkali metal sulfide and the alkali (earth) metal halide does not proceed smoothly to reduce the amount of the complex formed, which is not preferred in practical use. Further, if it is too much, such an undesirable phenomenon appears that a great amount of the complex is transferred to the solution resulting in much loss, or the decomposition of the alkali metal sulfide becomes violent.

The temperature condition for reacting the alkali metal sulfide and the alkali (earth) metal halide under the conditions as described above may be optional, in principle, but it is preferred to conduct the reaction usually within a range from 30 to 250°C and, particularly from 45 to 180°C.

If the temperature is too low being out of the temperature range described above, since the reaction rate tends to be lowered, it is preferred that the reaction is conducted within the temperature range as described above if applied to an actual production line.

On the contrary, if a temperature excessively higher than the above is used, there appears a tendency that the decomposition of the alkali metal sulfide becomes violent to result in much loss, or corrosion tends to occur.

After conducting the reaction while satisfying the respective conditions described above, the liquid (a polar solvent and water) is removed from the reaction product. The liquid removing means in this case has no particular restrictions and optional means may be employed as required from known means such as filtration or centrifugal separation.

Furthermore, a plurality of these means may be appropriately combined as required.

Although it can not accurately be determined, it is estimated that the active sulfide compounds such as M₂S, M¹M²S or M¹₂M²S₂ are contained as described above in the reaction product thus obtained as solid.

The reaction product serves for the subsequent polymerization.

It is preferred that the reaction product is washed before polymerization.

As the washing solution used for the washing, any of solvents that cause no reactions with the reaction product upon washing procedure may be used and, usually, the solvent used for the production of the reaction product or the solvent used for the polymerization at the next step may properly be selected and used.

As the preferred washing solution, there can be mentioned NMP, N-methyl-ε-caprolactam, dioxane, tetrahydrofuran, N,N-dimethyl urea and dimethyl imidazolidinone.

The washing procedures may be conducted sufficiently by the known operations.

### (b) Second method

In this case, the amounts of the alkali metal sulfide and the alkali (earth) metal halide used are the same as those described in the explanation for (I) above.

The amount of water to the alkali metal sulfide and the reaction temperature are the same as those described in the first method (a) above.

However, the reaction between the alkali metal sulfide and the alkali (earth) metal halide is conducted within the cyclic ether described above.

When the reaction is conducted in the cyclic ether, the reaction product, in which the containment of the active sulfide compounds such as M²S or M¹M²S or M¹₂M²S₂ are estimated, is deposited.

There is no particular restriction for the method of separating the reaction product precipitated from the reaction slurry and the same methods as those described for the first method above may be employed.

If the cyclic ether is contained in the separated reaction product, the cyclic ether is removed. The removal can be conducted, for example, by evaporating the cyclic ether under vacuum. Further, it may be eliminated by solvent substitution. As the solvent used for the solvent substitution, those polar solvents capable of dissolving the cyclic ether are preferred and, further, the polar solvent used for the polymerizing reaction is preferred. For instance, in the case of using dioxane as the cyclic ether, solvent substitution can be conducted by washing the reaction product using NMP. If the kind and the amount of the cyclic ether in the reaction product bring about no troubles to the polymerising reaction, they can be served as they are to the polymerizing reaction without drying or solvent substitution.

In this invention, the reaction product (active sulfide compounds) in the first stage may be separated to solid and liquid under heating or cooling.

This second method has remarkable features in that there are many advantages of reducing side-reactions of solvent and decomposition of alkali metal sulfide and solvent, improving the reference unit, and preventing the coloration of the resultant polymer and molding with less scorching phenomenon.

### Polymerization

The polymerization reaction is conducted by bringing the reaction product described above and the dihalogenated aromatic compound into contact with each other in the polar solvent.

### (1) Dihalogenated aromatic compound

The dihalogenated aromatic compound can include, for example, dichlorobenzene, dibromobenzene, diiodobenzene,
1-chloro-4-iodobenzene, 1-bromo-4-iodobenzene,
2,5-dichlorotoluene, 2,5-dichloro-p-xylene,
1-ethyl-4-isopropyl-2,5-dichloro-p-xylene,
1-ethyl-4-isopropyl-2,5-dibromobenzene,
1,2,4,5-tetramethyl-3,6-dichlorobenzene,
1-butyl-4-cyclohexyl-2,5-dibromobenzene,
1-hexyl-3-dodecyl-2,5-dichlorobenzene,
1-octadecyl-2,5-diiodobenzene,
1-phenyl-2-chloro-5-bromobenzene,
1-p-tolyl-2,5-dibromobenzene,
1-benzyl-2,5-chlorobenzene,
1-octyl-4-(3-methylcyclopentyl)-2,5-dichlorobenzene,
as well as other similar compounds. If required, a mixture of these compounds may be used.

In the present invention, a p-dihalogenated aromatic compound is preferred and p-dichlorobenzene is particularly preferred.

### (2) Polymerizing condition

The amount of the dihalogenated aromatic compound used, as expressed by the molar ratio of the dihalogenated aromatic compound/S (sulfur in the reaction product described above), is within a range usually from 0.75 to 2.0 and, preferably, from 0.90 to 1.3.

If the ratio is out of the range, for example, if it is less than 0.75, by-product such as thiophenol is remarkably formed. On the contrary, if it exceeds 2.0, since the equivalent valence is lost, there appears a tendency that the formation of the polymer is difficult or the productivity is remarkably reduced.

The polymerization is preferably conducted in a polar solvent.

As the polar solvent used for the polymerization, the same solvent as described above (excluding the cyclic ether mentioned above) may be used. The preferred solvent is also the same as described above, in which lactams such as N-alkyl pyrrolidone are preferred, N-methylpyrrolidone being particularly preferred.

The polymerization temperature is within a range from 180 to 350°C and, preferably, from 220 to 300°C.

If the polymerization is taken place at a temperature lower than 180°C, that is out of the above-mentioned range, the polymerizing reaction can not proceed at a sufficient rate. On the other hand, if it is intended to conduct polymerisation at a temperature higher than 350°C, decomposition of the once formed polymer or side reactions occur remarkably.

The time for the polymerizing reaction is up to 20 hours, and the polymerization is preferably completed within 0.1 - 8 hours.

During polymerisation, polyhalogen benzenes such as trichlorobenzene, halogenated aromatic nitro compounds such as dichloronitrobenzene and dinitrochlorobenzene, active hydrogen-containing halogenated aromatic compounds such as dichloroaniline may be present together as a branching agent.

After starting the polymerizing reaction, the polymerization can be terminated after the elapse of a predetermined time, for example, by discharging the polymerisation slurry into water and washing the precipitates with water or using a solvent such as acetone to obtain a polyarylene sulfide.

### Advantages of the Invention

Advantages of the present invention, which will be supported and demonstrated by examples described later, may be summarized as described below.

According to the present invention, a polyarylene sulfide of higher whiteness degree can be produced.

Particularly, (1) when the alkali metal sulfide and the alkali (earth) metal halide are reacted in the presence of water and a polar solvent at a volume ratio of water/polar solvent = 0.25 - 1.5, precipitates containing a portion of the formed alkali metal halide are separated and removed, and then the reaction product in the form of solution obtained by removing the water and a dihalogenated aromatic compound are polymerized while being in contact with each other, excellent advantage can be obtained in that the inclusion of by-produced salt into the resultant polyarylene sulfide can greatly be decreased to less than 100 ppm merely by the usual washing method and, as a result, a polyarylene sulfide of high whiteness can be produced.

(2) When the alkali metal sulfide and the alkali (earth) metal halide are reacted in the presence of the polar solvent and the water, and the reaction products in the solid form obtained by removing the polar solvent and water from the reaction slurry in which the water/polar solvent volume ratio is from 0.005 to 0.2, are brought into contact with the dihalogenated aromatic compound, an excellent advantage can be obtained in that the degradation of the solvent during polymerization can be decreased to thereby reduce the loss of the polar solvent and, further, the reaction by-products are reduced to render the resultant polyarylene sulfide more white.

(3) When the reaction product as a solid is obtained by removing the polar solvent and the water from the reaction product obtained by reacting the alkali metal sulfide and the alkali (earth) metal halide in the polar solvent in the presence of such a ratio of water as the water/alkali metal sulfide molar ratio is from 0.1 to 20 and then the reaction product in the form of a solid, preferably the reaction product washed by polar solvent, is polymerized with the dihalogenated aromatic compound while being in contact with each other, an excellent advantage can be obtained in that the decomposition of the alkali metal sulfide can be suppressed, the energy cost in the dehydrating step can be reduced, the loss of the polar solvent can be decreased and the coloration to the resultant polymer can be prevented.

(4) Since the alkali metal sulfide and the alkali (earth) metal halide are reacted in a particular solvent of a cyclic ether in the presence of a specific amount of water and, after separating the resultant product in the solid state from the reaction slurry, and the solid product and the dihalogenated aromatic compound are polymerized while being in contact with each other in the polar solvent other than the cyclic ether described above, an excellent advantage can be obtained in that the decomposition of the alkali metal sulfide is suppressed, the loss of the polar solvent is reduced, and a polyarylene sulfide of satisfactory moldability with no scorching upon molding and of high whiteness can be produced.

### Examples

### Example 1

Into a one liter-separable flask equipped with a reflux condenser, were charged 91.3 g (0.543 mol) of sodium sulfide 5-hydrate, 23.0 g (0.543 mol) of lithium chloride and 150 ml of water and they were stirred at room temperature for 50 min.

Then, 300 ml of N-methylpyrrolidone was added slowly dropwise and, after the completion of the addition, resultant sodium chloride was filtered off by sucktion under ice cooling.

The filtrate was charged into a one liter volume autoclave made of SUS-316L, distilled under a reduced pressure of 1.33 kPa (10 mmHg) in a nitrogen atmosphere to distill off 250 ml of a mixed water/NMP liquid. The liquid matter was present in the autoclave.

50 g (0.340 mol) of p-dichlorobenzene was dissolved into 100 ml of NMP, which was charged in the autoclave described above and reacted at 260°C for 3 hours.

After the reaction was over, the reaction mixture was cooled to room temperature and poured into one liter of water, and the resultant precipitates were washed with water twice, with acetone once (each with one liter) and then dried.

The resultant polymer was white and in an amount of 30.5 g (83 % yield : based on dichlorobenzene), and the solution viscosity ηᵢₙₕ related with the molecular weight (as 0.4 g/dl in α-chloronaphthalene at 206°C) was 0.14. The Na⁺ ion content of the resultant polymer was measured to be 48 ppm by atomic absorption spectrochemical analysis.

### Comparative Example 1

To a one liter volume autoclave made of SUS-316L, were charged 57.12 g (0.34 mol) of sodium sulfide 5-hydrate, 14.4 g (0.34 mol) of lithium chloride and 324 ml of NMP, and 155 ml of water/MNP liquid mixture was distilled off by azeotropic distillation.

Then, 54 g (0.36 mol) of p-dichlorobenzene was dissolved into 100 ml of NMP and polymerized and applied after treatment in the same procedures as in Example 1.

The resultant polymer was pale yellow-tinted white and in an amount of 33.4 g (86 % yield). The solution viscosity ηᵢₙₕ related to the molecular weight was 0.17 and the Na⁺ ion content in the polymer was 280 ppm.

### Example 2

The procedures were the same as those in Example 1 except for using 200 ml of water and distilling off 250 ml of water/NMP and using 64.6 g (0.44 mol) of p-dichlorobenzene.

The thus obtained polymer was in an amount of 40.3 g (85 % yield), the solution viscosity ηᵢₙₕ related to the molecular weight was 0.15 and Na⁺ was 54 ppm.

### Example 3

The procedures were the same as those in Example 1 except for using 300 ml of water and distilling off 400 ml of water/NMP, and using 73.6 g (0.500 mol) of p-dichlorobenzene.

The thus obtained polymer was in an amount of 13.4 g (25 % yield), solution viscosity ηᵢₙₕ related to the molecular weight was 0.08 and Na⁺ was 92 ppm.

### Comparative Example 2

When the procedures of Example 1 were conducted without adding water, the S ion content in the solution of NMP was as less as 0.05 mol and the subsequent experiment was not conducted.

### Example 4

In a one liter volume separable flask made of glass, 71.3 g (0.54 mol) of sodium sulfide and 23.0 g (0.54 mol) of lithium chloride were dispersed in 204 ml of anhydrous N-methylpyrrolidone (NMP) dried with calcium hydride, and reacted at 130°C for 90 min. The ratio of the water/NMP (volume ratio) was 0.14.

After cooling, the water and the NMP were removed by filtration, the residual precipitates were collected, which were charged together with 80.1 g (0.55 mol) of p-dichlorobenzene and 301 ml of NMP in one liter volume autoclave made of SUS-316L and reacted at 260°C for 3 hours.

After the elapse of a predetermined reaction time, the reaction mixture was cooled to a room temperature and poured into one liter of water and the precipitates were collected, which were washed with water twice and with acetone once in this order to obtain a white polyphenylene sulfide.

The amount of the resultant polyphenylene sulfide obtained was 38.2 g, the yield was 65 % (based on p-dichlorobenzene) and the solution viscosity ηᵢₙₕ (corresponding to the molecular weight in α-chloronaphthalene solvent at 0.4 g/dl concentration at 206°C) was 0.17. When the whiteness was measured according to ASTM 1925, by evaluating with yellowness index (Y1) in the granular state, it was 11.

### Example 5

The same procedures as in Example 4 were repeated except for using 47.3 g (0.54 mol) of sodium sulfide 0.5-hydrate product (purity as Na₂S : 88.72 %) instead of sodium sulfide 3-hydrate and 215 ml of NMP containing 10 g of water instead of 204 ml of anhydrous NMP, to obtain a polyarylene sulfide having the following physical property. The water/NMP (volume ratio) in this example was 0.071.

The amount of the polymer obtained was 53.4 g (90 % yield), the solution viscosity ηᵢₙₕ was 0.21 and the yellowness index (Y1) was 12.

### Example 6

The same procedures were conducted as those in Example 4 except for using 91.3 g (0.54 mol) of sodium sulfide 5-hydrate instead of sodium sulfide 3-hydrate. The water/NMP (volume ratio) was 0.24.

The amount of the polyarylene sulfide obtained was 29.8 g (53 % yield), the solution viscosity ηᵢₙₕ was 0.14 and the yellowness index (Y1) was 11.

### Example 7

The same procedures as in Example 4 were repeated except for using 30.2 g (0.27 mol) of calcium chloride instead of lithium chloride. The water/NMP (volume ratio) was 0.14. The amount of the polyarylene sulfide thus obtained was 41.2 g (71 % yield), the solution viscosity ηᵢₙₕ was 0.09 and the yellowness index (Y1) was 7.

### Example 8

Using 130.4 g (0.54 mol) of sodium sulfide 9-hydrate instead of sodium sulfide 3-hydrate, increasing the volume of dry NMP from 204 ml to 364 ml in Example 4 and using one liter volume autoclave made of SUS-316L from the first, they were reacted at 120°C for 90 minutes. Then, 252 ml of a mixture of water and NMP was distilled off, the auto-clave was opened and the residual solvent was further removed by filtration to obtain precipitates. The subsequent operations were quite the same as those in Example 4.

The water/NMP (volume ratio) at the charging was 0.24. As a result of a Karl-Fischer's measurement for the water content in the distilled off mixture of water/NMP, it was found that about one mol of water remained in the system based on one mol of sodium sulfide and, as a result of the calculation based thereon, the water/NMP volume ratio before filtration and separation was 0.05.

The amount of the polyarylene sulfide obtained was 54.6 g (92 % yield), the solution viscosity ηᵢₙₕ was 0.24 and the yellowness index (Y1) was 11.

### Example 9

The same procedures as those in Example 8 were repeated except for using 47.3 g (0.54 mol) of sodium sulfide 0.5-hydrate product instead of sodium sulfide 9-hydrate and 305 ml of NMP containing 10 g of water and distilling off 150 ml of a mixture of water and NMP. The NMP (molar ratio) just before the filtration in this example was 0.064.

The amount of the polyarylene sulfide obtained was 53.8 g (91 % yield), the solution viscosity ηᵢₙₕ was 0.21 and the yellowness index (Y1) was 11.

### Example 10

The same procedures as those in Example 9 were conducted except for using a mixture of 81.5 ml of water and 368 ml of NMP instead of 364 ml of anhydrous NMP and distilling off the mixture of the water and the NMP as in Example 9. The water/NMP (volume ratio) at the charging was 0.46. Further, the water/NMP (volume ratio) just before the filtration and the separation was 0.082.

The amount of the polyarylene sulfide obtained was 47.8 g (82 % yield), the solution viscosity ηᵢₙₕ was 0.23 and the yellowness index (Y1) was 12.

### Comparative Example 3

The same procedures as those in Example 4 were conducted except for transferring the content after the reaction in a separable flask into one liter volume of an autoclave made of SUS-316L without removing water and NMP, adding 80.1 g (0.55 mol) of p-dichlorobenzene to 100 ml of anhydrous NMP and bringing them to react at 260°C for 3 hours.

The amount of the polyarylene sulfide obtained was 45.0 g (77 % yield), the solution viscosity ηᵢₙₕ was 0.17 and the yellowness index (Y1) was 23.

### Comparative Example 4

The same procedures as those in Example 5 were repeated except for conducting pre-treatment without removing water-containing NMP and, thereafter, transferring the contents to an autoclave made of SUS-316L and reacting them together with 100 ml of anhydrous NMP by the addition of 80.1 g (0.55 mol) of p-dichlorobenzene.

The amount of the polyarylene sulfide obtained was 31.3 g (52 % yield), the solution viscosity ηᵢₙₕ was 0.12 and the yellowness index (Y1) was 18.

### Comparative Example 5

This comparative example was conducted by procedures similar to those in the example described in Japanese Examined Patent Publicaiton No. Sho 52-12240.

That is, the same procedures as those in Example 4 were conducted except for transferring the contents after the reaction in the separable flask to a one liter volume autoclave made of SUS-316L without removing water and NMP, distilling off 85 ml of the mixture of water and NMP by distillation, cooling to 70°C, adding 80.1 g (0.55 mol) of p-dichlorobenzene dissolved in 100 ml of anhydrous NMP and then reacting them at 260°C for 3 hours.

The amount of the polyarylene sulfide obtained was 53.1 g (90.5 % yield), the solution viscosity ηᵢₙₕ was 0.24 and the yellowness index (Y1) was 21.

As can be seen from Comparative Examples 3 - 5 above, the products showed higher values of the yellowness and were poor in the whiteness than any of those obtained by the procedures Example 4 - 10.

### Comparative Example 6

A pre-treatment was conducted by using 42.8 g (0.54 mol) of substantially pure sodium sulfide (98.4 % purity : converted as Na₂S) instead of sodium sulfide 3-hydrate in Example 4. The water/NMP (volume ratio) was 0.0034.

When the autoclave was opened, it was substantially the same as in the case of using sodium sulfide alone, insoluble matters were separated by filtration and, when Li ions and chlorine ions in the filtrate were separately determined by atomic absorption spectrochemical analysis and ion chromatography, it was found that about 95 % of LiCl was dissolved in NMP and the subsequent polymerization was not conducted.

### Reference Example 1

The same procedures as those in Example 1 were conducted except for applying a treatment by adding 75 ml of water and 204 ml of NMP instead of 204 ml of anhydrous NMP in Example 4. The water/NMP volume ratio was 0.51.

The amount of the resultant brown polymer was 2.3 g (4 % yield ), the solution viscosity ηᵢₙₕ was less than 0.01 and no substantial polymer was formed.

### Example 11

Into a 2 liter volume autoclave made of stainless steel (SUS-316L), were charged 130.4 g (0.54 mol) of sodium sulfide 9-hydrate, 23.0 g (0.54 mol) of lithium chloride and 356 ml of N-methyl-2-pyrrolidone (NMP), and they were continuously stirred at 70°C for 15 min. The water/alkali metal sulfide molar ratio was 9. After the reaction, 252 ml of water/NMP mixture was removed by azeotropic distillation.

Then, after cooling the contents to the room temperature, they were taken out, and the precipitates were collected by filtration and washed twice each with 50 ml of NMP.

The amount of the reaction product obtained was 158.6 g. As a result of the measurement for the S content in the reaction content with iodometry, 0.47 mol of sulfur was contained. It was substantiallY confirmed from the result of other experiments that a complex of NaLiS was contained in the reaction product.

150 g of the reaction product containing the complex, 61.7 g (0.42 mol) of p-dichlorobenzene and 250 ml of NMP were mixed and polymerized at 260°C for 3 hours. The content was poured into one liter of water and the precipitated polymer was collected, washed twice each with one liter of water and then washed with one liter of acetone, followed by drying.

The amount of polyphenylene sulfide obtained was 41.3 g (91.0 % yield : based on p-dichlorobenzene), the solution viscosity ηᵢₙₕ related to the molecular weight (in α-chloronaphthalene solution at 0.4 g/dl concentration at 206°C). As a result of the measurement for the polymer whiteness according to ASTM 1925, the yellowness index (Y1) was 11.

### Example 12

When the same procedures as in Example 11 were conducted except for using 29.8 g (0.27 mol) of calcium chloride instead of lithium chloride in Example 11, the amount of the resultant white precipitates was 173 g. As the result of measurement for the S content, it was found that 51 mol of a complex (structure estimated as : CaNa₂S₂) was present in the white precipitates. The water/alkali metal sulfide molar ratio in the complex forming reaction was 9.

150 g of the complex-containing precipitates that partially contain the solvent, 65.0 g (0.44 mol) of p-dichlorobenzene and 250 ml of NMP were mixed and, when the same procedures as those in Example 11 were conducted, a polyarylene sulfide was obtained in an amount of 38.8 g (82 % yield) with the solution viscosity ηᵢₙₕ of 0.18 and the yellowness index (Y1) of 6.

### Example 13

48.0 g (0.54 mol) of sodium sulfide 0.5-hydrate (88.2 % purity : converted as Na₂S), 23.0 g (0.54 mol) of lithium chloride and 300 ml of dioxane containing 9 ml of water were mixed and stirred at 95°C for 15 min. The water/alkali sulfide molar ratio was 1.51.

Then, the contents were cooled to room temperature, taken out and processed by the same procedures as in Example 11 except for using dioxane as the washing solvent.

The amount of the resultant complex partially containing the solvent was 91.0 g and the S content was 0.53 mol. 80.0 g of the complex, 68.5 g (0.47 mol) of p-dichlorobenzene and 280 ml of NMP were charged in an autoclave and the same procedures as in Example 11 were conducted. A polyarylene sulfide was obtained in an amount of 45.0 g (89.0 % yield), the solution viscosity ηᵢₙₕ was 0.25 and the yellowness index (Y1) was 10.

### Example 14

The same procedures as those in Example 13 were repeated except for using N-methylpyrrolidone for the washing of the complex.

The thus obtained polymer had physical property of a solution viscosity ηᵢₙₕ of 0.22 and a yellowness index (Y1), of 11.

### Example 15

The same procedures as those in Example 11 were conducted except for using 300 ml of dioxane instead of 356 of NMP and, thereafter, 150 ml of a mixed solvent of water and dioxane was distilled off. The water/alkali sulfide molar ratio was 9 upon charging.

Then, distillation was conducted with the addition of 250 ml of NMP, to distill off 200 ml of the dioxane/NMP mixture, and the precipitated complex was separated by filtration, which was applied with the same treatment as in Example 11.

The amount of the complex formed containing a portion of the solvent was 138 g and the S content was 0.49 mol. The polyarylene sulfide derived from the complex had a solution viscosity ηᵢₙₕ of 0.25 and a yellowness index (Y1) of 10.

### Comparative Example 7

The procedures were conducted according to the method as described in U.S.-A-.4,038,263.

That is, a water/NMP mixture was distilled off by azeotropic distillation as in Example 11 to obtain a dehydrated composition. The dehydrated composition contained 4-methylamino acid (1.5 mol) as the ring opening product of NMP, brown tar-like material estimated to be condensated products of NMP and, further, a small amount (0.08 %) of NMP and, further, a small amount (0.08 %) of hydrogen sulfide.

The resultant dehydrated composition and a solution prepared by dissolving 79.8 g (0.54 mol) of p-dichlorobenzene in 100 ml of NMP were mixed and the polymerization and after-treatment were applied in the same way.

The amount of the resultant polyarylene sulfide was 52 g (89 % yield), the solution viscosity ηᵢₙₕ was 0.26 and the yellowness index (Y1) was 17.

### Reference Example 2

A pre-treatment was applied by the same procedures as those in Example 11 except for using 42.8 g (0.54 mol) of substantially anhydrous sodium sulfide (98.4 % yield : converted as Na₂S) instead of sodium sulfide 9-hydrate. The water/alkali metal sulfide molar ratio was 0.07.

When the autoclave was opened, since the situation was substantially the same as in the case where the sodium sulfide was dissolved alone, Li and Cl were analyzed quantitatively for the liquid portion after the filtration by atomic absorption spectrochemical analysis and ion chromatography. As a result, it was found that about 97.1 % of Li and Cl remained in NMP and the complex forming reaction has scarcely taken place. Then, the subsequent experiment was not conducted.

### Example 16

In a one liter volume separable flask made of glass, 47.3 g (0.54 mol) of sodium sulfide 0.5-hydrate (88. 2 % purity converted as Na₂S) and 23.0 g (0.54 mol) of lithium chloride were dispersed in 305 ml of dioxane containing about 5 g of water and reacted for 90 min while being heated to 102°C. In this case, hydrogen sulfide evolved during reaction was carried on a nitrogen gas stream, absorbed to 200 ml of an aqueous 5 % sodium hydroxide solution and quantitatively determined by the customary iodometry. As a result, it was 0.03%/sodium sulfide with no substantial decomposition. After cooling, precipiates were collected by filtration and charged together with 80.1 g (0.55 mol) of p-dichlorobenzene and 304 ml of N-methylpyrrolidone into a one liter volume autoclave made of SUS-316L and reacted by heating at 260°C for 3 hours. After cooling, the autoclave was opened and the reaction product was poured into one liter of water to collect solid precipitates. The solid precipitates were washed twice with water and once with acetone in this order to obtain a white polyphenylene sulfide. The amount of the polyphenylene sulfide was 53 g (90 % yield, based on p-dichlorobenzene), and the solution viscosity ηᵢₙₕ related to the molecular weight was 0.19 and the whiteness thereof evaluated by the yellowness index (Y1) according to ASTM 1925 was 9. Further, N-methylpyrrolidone recovered after the completion of the polymerization was pale yellow, which could be used again.

On the other hand, dioxane was removed by distillation from the filtrate (containing dioxane), from which the precipitates had been separated, were removed by distillation, the evolved gases (containing hydrogen sulfide) were purged by nitrogen and purged gases were absorbed into 200 ml of an aqueous 5 % sodium hydroxide solution in the same way as described above. As a result of quantitatively determining the dissolved hydrogen sulfide by iodometry, it was 0.0 - 0.01 mol/sodium sulfide with no substantial decomposition.

### Example 17

Quite the same treatment as in Example 16 was conducted except for using 130.4 g (0.54 mol) of sodium sulfide 9-hydrate and 305 ml of anhydrous dioxane.

The amount of the polyarylene sulfide obtained was 52 g (88 % yield), the solution viscosity ηᵢₙₕ related to the molecular weight was 0.14 and the yellowness index (Y1) was 8.

### Example 18

In Example 17, precipitates were collected and charged in an autoclave, to which 200 ml of N-methylpyrrolidone was added to distill off 50 ml of low boiling products under a nitrogen gas stream. Then, 80.1 g (0.55 mol) of p-dichlorobenzene dissolved in 155 ml of N-methylpyrrolidone was charged into the autoclave and the same polymerization and after-treatment as in Example 16 were conducted. The amount of the resultant polyarylene sulfide was 55 g (94 % yield), the solution viscosity ηᵢₙₕ related to the molecular weight was 0.24 and the yellowness index (Y1) was 10.

### Example 19

Quite the same procedures were conducted as in Example 16 except for using 30.2 g (0.27 mol) of calcium chloride instead of lithium chloride.

The amount of the polyarylene sulfide obtained was 47 g (80 % yield), the solution viscosity ηᵢₙₕ related to the molecular weight was 0.10 and the yellowness index (Y1) was 6.

### Example 20

Quite the same procedures as in Example 16 were conducted except for using 305 ml of tetrahydrofuran instead of dioxane.

The amount of the polyarylene sulfide obtained was 51 g (87 % yield), the solution viscosity ηᵢₙₕ related to the molecular weight was 0.20 and the yellowness index (Y1) was 8.

### Example 21

The same procedures as those in Example 16 were conducted except for drying under a reduced pressure the solid precipitates obtained by the reaction in dioxane while heating at 100°C over one day and one night. The amount of the polyarylene sulfide obtained was 51 g (87 % yield), the solution viscosity ηᵢₙₕ related to the molecular weight was 0.18 and the yellowness index (Y1) was 9.

### Example 22

The same procedures as in Example 16 were conducted except for using N-methylpyrrolidone instead of dioxane.

The amount of the polyarylene sulfide obtained was 53 g (90 % yield), the solution viscosity ηᵢₙₕ related to the molecular weight was 0.21 and the yellowness index (Y1) was 12.

The polyarylene sulfide was more brown than the products in Example 16. Further, N-methylpyrrolidone after the completion of the polymerization was pale brown.

Then, as a result of quantitative determination by the same procedures as in the case of Example 16 for the amount of decomposed hydrogen sulfide, hydrogen sulfide at 1.5 mol/sodium sulfide was observed.

### Example 23

After kneading the polyarylene sulfide obtained in Example 16 and 22, as well as commercially available polyarylene sulfide (trade name : RYTON P-47 (manufactured by Phillips Co.)) at 300°C for 5 min by a small table type molding machine respectively, they were pelletized by drawing a strand. Then, they were placed on a press plate of a table type pressing machine heated to 330°C and degasing was repeated ten times by a method of pressurizing for one sec under 490 MPa (50 kg/cm²) and then returning to the atmospheric pressure.

Then, the state pressurized by 980 MPa (100 kg/cm²) at a temperature of 330°C was maintained for one min.and then the press plate was transferred to a cold pressing machine and cooled to room temperature. The whiteness and the yellowness (Y1) of the thus obtained plates were measured by the colorimetric color difference meter.

The results are shown in Table 1.

The whiteness (W(Lab)) was measured according to JIS P8123.

As the value for the yellowness is greater, the product becomes more yellow.

**Table 1**

| | W(Lab) | Y1 |
|---|---|---|
| Example 22 | 49 | 17 |
| Example 23 | 35 | 22 |
| RYTON | 21 | 48 |

## Claims

1. A process for producing a polyarylene sulfide which comprises producing a reaction slurry by reacting an alkali metal sulfide (M²₂S) and at least one ingredient selected from alkali metal halides and alkaline earth metal halides (M¹X) in the presence of water and a polar solvent, and contacting the reaction product with a dihalogenated aromatic compound, **characterized in that** a volume ratio of water/polar solvent of from 0.25 to 1.5 is used and that the reaction product is contacted with the dihalogenated aromatic compound in the form of a solution recovered from the reaction slurry by a solid-liquid separation.

2. A process for producing a polyarylene sulfide which comprises producing a reaction slurry by reacting an alkali metal sulfide (M²₂S) and at least one ingredient selected from alkali metal halides and alkaline earth metal halides (M¹X) in the presence of water and a polar solvent, and contacting the reaction product with a dihalogenated aromatic compound, **characterized in that** the molar ratio of water/alkali metal sulfide is from 0.1 to 20, that a volume ratio of water/polar solvent of from 0.005 to 0.2 is used and that the reaction product is contacted with the dihalogenated aromatic compound in the form of a solid recovered from the reaction slurry by a solid-liquid separation.

3. The process as claimed in claim 1 or 2, **characterized in that** the alkali metal sulfide is sodium sulfide.

4. The process as claimed in claim 1 or 2, **characterized in that** the alkali metal halide is lithium chloride and the alkaline earth metal halide is calcium chloride.

5. The process as claimed in claim 1 or 2, **characterized in that** the dihalogenated aromatic compound is a p-dihalogenated aromatic compound.

6. The process as claimed in claim 2, **characterized in that** the polar solvent is a lactam compound.

7. The process as claimed in claim 2, **characterized in that** the polar solvent is a cyclic ether.

8. The process as claimed in claim 2, **characterized in that** the polar solvent is dioxane or tetrahydrofuran.

9. The process as claimed in claim 1 or 2, **characterized in that** the molar ratio of M²₂S/M¹X is from 1/0.03 to 1/2.0.

10. The process as claimed in claim 1 or 2, **characterized in that** the amount of the dihalogenated aromatic compound used, as represented by the molar ratio of the dihalogenated compound/sulfur, the sulfur being present in the sulfide reaction product, is from 0.75 to 2.0.

## Patentansprüche

1. Verfahren zur Herstellung eines Polyarylensulfids, welches die Herstellung einer Reaktionsaufschlämmung durch Umsetzen eines Alkalimetallsulfids (M²₂S) und mindestens eines aus Alkalimetallhalogeniden und Erdalkalimetallhalogeniden (M¹X) gewählten Bestandteils in Gegenwart von Wasser und eines polaren Lösungsmittels und das Kontaktieren des Reaktionsprodukts mit einer dihalogenierten aromatischen Verbindung umfaßt, **dadurch gekennzeichnet**, daß ein Volumenverhältnis von Wasser/polares Lösungsmittel von 0,25 bis 1,5 verwendet wird und daß das Reaktionsprodukt mit der dihalogenierten aromatischen Verbindung in Form einer aus der Reaktionsaufschlämmung durch eine Fest-Flüssig-Abtrennung gewonnenen Lösung kontaktiert wird.

2. Verfahren zur Herstellung eines Polyarylensulfids, welches die Herstellung einer Reaktionsaufschlämmung durch Umsetzen eines Alkalimetallsulfids (M²₂S) und mindestens eines aus Alkalimetallhalogeniden und Erdalkalimetallhalogeniden (M¹X) gewählten Bestandteils in Gegenwart von Wasser und eines polaren Lösungsmittels und das Kontaktieren des Reaktionsprodukts mit einer dihalogenierten aromatischen Verbindung umfaßt, **dadurch gekennzeichnet**, daß das Molverhältnis von Wasser/Alkalimetallsulfid 0,1 bis 20 beträgt, daß ein Volumenverhältnis von Wasser/polares Lösungsmittel von 0,005 bis 0,2 verwendet wird und daß das Reaktionsprodukt mit der dihalogenierten aromatischen Verbindung in Form eines aus der Reaktionsaufschlämmung durch eine Fest-Flüssig-Abtrennung gewonnenen Feststoffs kontaktiert wird.

3. Verfahren nach Anspruch 1 oder 2, **dadurch gekennzeichnet**, daß das Alkalimetallsulfid Natriumsulfid ist.

4. Verfahren nach Anspruch 1 oder 2, **dadurch gekennzeichnet,** daß das Alkalimetallhalogenid Lithiumchlorid und das Erdalkalimetallhalogenid Calciumchlorid ist.

5. Verfahren nach Anspruch 1 oder 2, **dadurch gekennzeichnet**, daß die dihalogenierte aromatische Verbindung eine p-dihalogenierte aromatische Verbindung ist.

6. Verfahren nach Anspruch 2, **dadurch gekennzeichnet**, daß das polare Lösungsmittel eine Lactamverbindung ist.

7. Verfahren nach Anspruch 2, **dadurch gekennzeichnet**, daß das polare Lösungsmittel ein zyklischer Ether ist.

8. Verfahren nach Anspruch 2, **dadurch gekennzeichnet**, daß das polare Lösungsmittel Dioxan oder Tetrahydrofuran ist.

9. Verfahren nach Anspruch 1 oder 2, **dadurch gekennzeichnet**, daß das Molverhältnis von M²₂S/M¹X im Bereich von 1/0,03 bis 1/2,0 liegt.

10. Verfahren nach Anspruch 1 oder 2, **dadurch gekennzeichnet**, daß die Menge der verwendeten dihalogenierten aromatischen Verbindung, ausgedrückt durch das Molverhältnis von dihalogenierter Verbindung/Schwefel, wobei der Schwefel in dem Sulfidreaktionsprodukt vorliegt, 0,75 bis 2,0 beträgt.

## Revendications

1. Procédé de préparation d'un polysulfure d'arylène, selon lequel on prépare une suspension réactionnelle en faisant réagir un sulfure de métal alcalin (M²₂S) et au moins un ingrédient choisi parmi les halogénures de métal alcalin et les halogénures de métal alcalino-terreux (M¹X) en présence d'eau et d'un solvant polaire, et on met en contact le produit de réaction avec un composé aromatique dihalogéné, caractérisé en ce qu'on emploie un rapport volumique de l'eau au solvant polaire de 0,25 à 1,5, et en ce que le produit de réaction est mis en contact avec le composé aromatique dihalogéné sous la forme d'une solution récupérée à partir de la suspension réactionnelle par séparation solide-liquide.

2. Procédé de préparation d'un polysulfure d'arylène, selon lequel on prépare une suspension réactionnelle en faisant réagir un sulfure de métal alcalin (M²₂S) et au moins un ingrédient choisi parmi les halogénures de métal alcalin et les halogénures de métal alcalino-terreux (M¹X) en présence d'eau et d'un solvant polaire, et on met en contact le produit de réaction avec un composé aromatique dihalogéné, caractérisé en ce que le rapport molaire de l'eau au sulfure de métal alcalin, est de 0,1 à 20, en ce qu'on emploie un rapport volumique de l'eau au solvant polaire de 0,005 à 0,2, et en ce que le produit de réaction est mis en contact avec un composé aromatique dihalogéné sous la forme d'un solide récupéré à partir de la suspension réactionnelle par séparation solide-liquide.

3. Procédé selon la revendication 1 ou 2, caractérisé en ce que le sulfure de métal alcalin est le sulfure de sodium.

4. Procédé selon la revendication 1 ou 2, caractérisé en ce que l'halogénure de métal alcalin est le chlorure de lithium, et en ce que l'halogénure de métal alcalino-terreux est le chlorure de calcium.

5. Procédé selon la revendication 1 ou 2, caractérisé en ce que le composé aromatique dihalogéné est un composé aromatique p-dihalogéné.

6. Procédé selon la revendication 2, caractérisé en ce que le solvant polaire est un lactame.

7. Procédé selon la revendication 2, caractérisé en ce que le solvant polaire est un éther cyclique.

8. Procédé selon la revendication 2, caractérisé en ce que le solvant polaire est le dioxanne ou le tétrahydrofuranne.

9. Procédé selon la revendication 1 ou 2, caractérisé en ce que le rapport molaire M²₂S/M¹X, est de 1/0,03 à 1/2,0.

10. Procédé selon la revendication 1 ou 2, caractérisé en ce que la quantité du composé aromatique dihalogéné employé, exprimée par le rapport molaire du composé dihalogéné au soufre, le soufre étant présent dans le produit de réaction sulfuré, est de 0,75 à 2,0.
